# FASCICULE DE BREVET EUROPEEN

(11) **EP 0 719 617 B1**
(45) Date de publication et mention de la délivrance du brevet: **12.01.2000**
(21) Numéro de dépôt: 95402708.2
(22) Date de dépôt: 30.11.1995
(51) Int. Cl.: B24B 33/08, B24B 33/06, B23Q 15/28

(54) **Procédé et dispositif de rattrapage d'usure d'un outil de rodage d'une pièce sur une machine de rodage, notamment d'un rodoir expansible pour alésages**
Verfahren und Vorrichtung zum Verschleissausgleich eines Werkstücks Honwerkzeugs auf einer Honmaschine, insbesondere eines nachstellbares Honwerkzeug für Bohrungswänden
Method and device for wear adjustment of a workpiece honing tool on a honing machine, especially an expandable honing tool for bore surfaces

(30) Priorité: 27.12.1994 FR 9415719
(43) Date de publication de la demande: 03.07.1996
(73) Titulaire: AUTOMOBILES PEUGEOT, 75116 Paris (FR); AUTOMOBILES CITROEN, 92200 Neuilly-sur-Seine (FR)
(72) Inventeur: Muller, Guillaume, F-94510 La Queue en Brie (FR)
(74) Mandataire: Thinat, Michel

(56) Documents cités:
- EP-A- 0 063 983
- EP-A- 0 430 817
- DE-A- 2 442 243
- GB-A- 2 115 324

## Description

La présente invention concerne un procédé et un dispositif de rattrapage d'usure d'un outil de rodage d'une pièce sur une machine de rodage, notamment d'un rodoir expansible pour alésages du type connu de l'EP-A-0063983.

Dans ce dispositif, un poignard entraîné par le piston d'un vérin solidaire du bâti de la machine de rodage est équipé de cônes assurant l'expansion, à chaque cycle de rodage, de bâtonnets abrasifs ou pierres du rodoir pour l'usinage de la pièce.

Selon le dispositif connu ci-dessus, le vérin manoeuvrant le poignard portant les cônes d'expansion est commandé de façon à revenir toujours au même point de départ du cycle de rodage. Ceci a pour inconvénient que, du fait qu'à chaque passe de rodage les abrasifs s'usent, la course nécessaire du poignard pour aboutir à l'usinage d'alésages au même diamètre final s'allongera progressivement de cycle en cycle, se traduisant ainsi par un temps de cycle variable et une qualité d'usinage variable en fonction de la course du piston du vérin d'expansion.

La présente invention a pour but d'éliminer l'inconvénient ci-dessus des dispositifs connus en proposant un procédé et un dispositif de rattrapage d'usure de l'outil de rodage permettant d'obtenir un cycle d'usinage constant tout au long de la durée de vie des abrasifs qui est d'environ 300 pièces usinées pour une usure d'environ 18 mm au diamètre du rodoir.

A cet effet, selon l'invention, le procédé de rattrapage d'usure d'un outil de rodage d'une pièce sur une machine de rodage, notamment d'un rodoir expansible pour alésages, où les bâtonnets abrasifs ou pierres de rodoir subissent à chaque cycle de rodage une expansion par un poignard de poussée à cônes d'expansion entraîné par un piston du vérin, est caractérisé en ce qu'il consiste à mesurer la valeur de position, à partir d'une origine de cycle de rodage, du poignard à la fin de chaque cycle de rodage à laquelle la pièce est entièrement usinée et retrancher à la valeur mesurée de position du poignard une valeur constante de course de dégonflage du rodoir pour obtenir une nouvelle origine du cycle de rodage suivant et à commander le dégonflage du rodoir jusqu'à atteindre la nouvelle origine calculée du cycle de rodage suivant.

Le procédé consiste également à déterminer préalablement la valeur de course constante de dégonflage du rodoir.

L'invention propose également un dispositif de rattrapage d'usure d'un outil de rodage d'une pièce sur une machine de rodage, notamment d'un rodoir expansible pour alésages, comprenant un vérin solidaire du bâti de la machine de rodage, un poignard entraîné par le piston du vérin et équipé de cônes assurant l'expansion, à chaque cycle de rodage, des bâtonnets abrasifs ou pierres du rodoir pour l'usinage de la pièce, comprenant des moyens pour mesurer, à partir d'une origine de cycle de rodage, la valeur de position du poignard à la fin de chaque cycle de rodage où la pièce est entièrement usinée caracterisé en ce qu'il comprend des moyens pour retrancher à la valeur mesurée de position du poignard une valeur de course constante de dégonflage du rodoir pour obtenir une nouvelle origine du cycle de rodage suivant.

De préférence, les moyens de mesure précités comprennent un élément solidaire du piston du vérin précité permettant de repérer la position du poignard et un capteur disposé en face de l'élément de repérage de façon à fournir une valeur de distance séparant l'élément de repérage du capteur proportionnelle à la position du piston par rapport au corps du vérin.

Avantageusement, l'élément de repérage comporte une partie inclinée relativement à l'axe longitudinal du vérin et le capteur est fixé au corps du vérin en étant également incliné parallèlement à la partie inclinée de l'élément de repérage.

Les moyens permettant d'obtenir la nouvelle origine d'un cycle de rodage comprennent un moyen mémoire mémorisant la valeur de course constante de dégonflage précitée et un moyen de calcul effectuant, à la fin de chaque cycle de rodage, la différence entre la valeur de distance fournie par le capteur représentative de la position du poignard et la valeur mémorisée de course constante de dégonflage.

Avantageusement, les moyens mémoire et de calcul précités font partie d'un automate de commande et de contrôle des cycles de rodage.

De préférence, le capteur est du type analogique et est relié au moyen de calcul précité par l'intermédiaire d'un circuit de conversion analogique-numérique.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention.
La figure 1 est une vue en perspective d'un vérin de commande d'expansion et de dégonflage de bâtonnets abrasifs ou pierres d'un rodoir expansible.
La figure 2 est une vue schématique en coupe longitudinale du vérin de la figure 1.
La figure 3 est une vue schématique représentant le principe de mesure du déplacement du poignard d'expansion des bâtonnets abrasifs.
La figure 4 est un graphe représentant la position du poignard en fonction du temps.

En se reportant aux figures, la référence 1 désigne un vérin hydraulique fixé au bâti d'une machine de rodage (non représentée) et destiné lors de chaque cycle de rodage à commander l'expansion des bâtonnets abrasifs ou pierres 2 d'un rodoir expansible pour usiner des alésages à un diamètre final déterminé et la rétraction ou dégonflage des bâtonnets abrasifs 2 une fois l'usinage terminé.

Un tel vérin 1 est déjà connu en soi et seules les parties essentielles de celui-ci seront décrites ci-dessous en liaison avec l'invention.

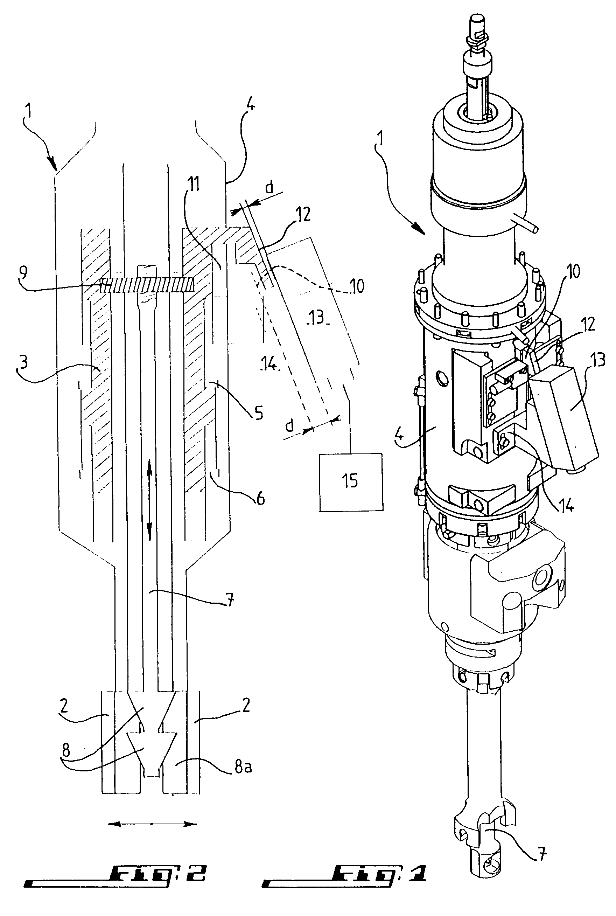

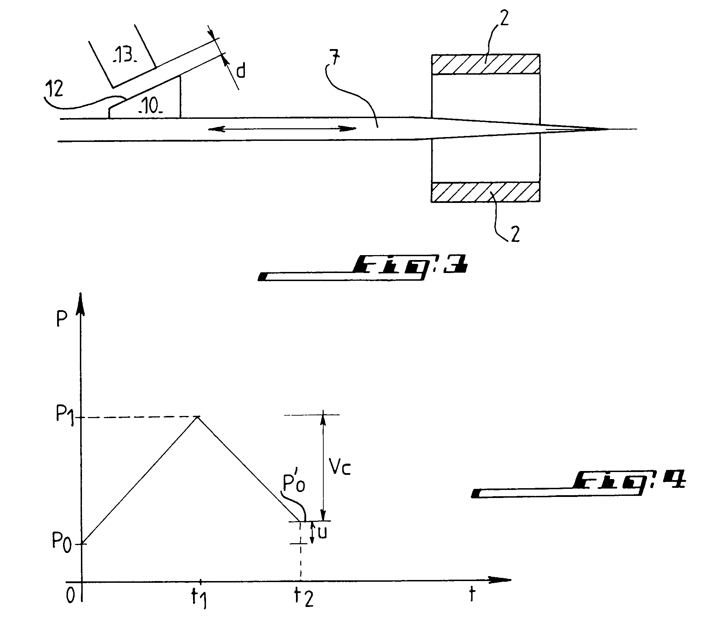

Le vérin 1 comprend un piston 3 mobile axialement dans le corps 4 du vérin entre une position haute représentée en figure 2 et une position basse en injectant de l'huile sous pression dans une chambre annulaire supérieure 5 pour le mouvement de descente du piston 3 et une chambre annulaire inférieure 6 pour le mouvement de remontée de ce piston.

Le piston 3 entraîne en translation une pièce longiligne formant poignard 7 dont une extrémité comporte des cônes 8 d'expansion ou d'écartement, dans une direction radiale, des bâtonnets abrasifs 2 par l'intermédiaire d'un poussoir 8a. L'autre extrémité du poignard 7 est fixée, par exemple par vissage, à une plaque transversale 9 solidaire du piston 3.

Selon l'invention, le piston 3 comporte, solidaire de celui-ci, un élément de repérage 10 faisant saillie à l'extérieur du vérin 1 au travers d'une fenêtre 11 du corps 4 s'étendant parallèlement à l'axe longitudinal du vérin 1. L'élément de repérage 10 comporte une partie formant rampe 12 inclinée par rapport à l'axe longitudinal du corps 4 du vérin et convergeant vers la partie supérieure du vérin au vu des figures 1 et 2.

Un capteur analogique 13 est fixé au corps 4 du vérin 1 par l'intermédiaire d'une patte de fixation 14 en étant également incliné relativement à l'axe longitudinal du vérin 1 parallèlement à la partie formant rampe 12 de l'élément de repérage 10 et faisant face à cette partie.

L'ensemble constitué par l'élément de repérage 10 et le capteur analogique 13 constitue un moyen de mesure de la position du piston 3 et donc du poignard 7 relativement au corps 4 du vérin 1. Plus précisément, le capteur 13 mesure une valeur de distance d entre lui-même et la partie formant rampe 12 de l'élément de repérage 10 proportionnelle à la position du poignard 7 par rapport au corps 4 du vérin.

Dans le but du rattrapage d'usure des bâtonnets abrasifs 2 du rodoir, le dispositif de l'invention comprend également un circuit électronique schématiquement représenté en 15 à la figure 2 comprenant une mémoire dans laquelle est mémorisée une valeur constante de course dite de dégonflage du rodoir, c'est-à-dire une valeur de course constante de retour du poignard 7 après achèvement de l'opération d'usinage d'un alésage au diamètre final souhaité. Ce dégonflage s'accompagne d'un rapprochement radial des bâtonnets abrasifs 2 vers l'axe longitudinal du poignard 7.

Le circuit électronique 15 est relié au capteur analogique 13 et peut comporter un convertisseur qui convertit sous forme numérique les valeurs analogiques mesurées de distance d entre le capteur 13 et l'élément de repérage 10. Le circuit électronique 15 est également adapté pour calculer, à la fin de chaque cycle de rodage où l'opération d'usinage de l'alésage au diamètre final souhaité est effectuée, la différence entre la valeur de position relativement au corps 4 du vérin 1 du poignard 7 et la valeur de course constante de dégonflage du rodoir de façon à obtenir une nouvelle origine du cycle de rodage suivant comme cela ressortira mieux de la description qui va suivre.

De préférence, le circuit électronique 15 fait partie de l'automate (non représenté) commandant et contrôlant les cycles de rodage des alésages. Dans le cas où le convertisseur analogique-numérique est associé au capteur analogique 13, ce dernier peut être raccordé aisément à des cartes d'entrée d'automates classiques.

Le principe de rattrapage de l'usure des bâtonnets abrasifs du rodoir lors de l'usinage d'alésages va être maintenant expliqué en se référant notamment à la figure 4.

L'automate commande le déplacement du piston 3 à partir de sa position supérieure d'origine ou point de départ du premier cycle de rodage, ce qui s'accompagne d'un déplacement concomitant en translation du poignard 7 relativement au corps 4 du vérin. Le déplacement du poignard 7 produit une expansion des bâtonnets abrasifs 2 en les poussant radialement hors de l'axe du poignard 7 comme symbolisé par la double flèche en figure 2 jusqu'à ce que les bâtonnets abrasifs 2 aient usiné l'alésage correspondant à un diamètre ou cote théorique souhaité correspondant à la fin du cycle de rodage. Le déplacement du poignard 7 à la fin de ce cycle de rodage est déterminé en mesurant la distance d entre le capteur 13 et la partie inclinée 12 de l'élément de repérage 10 représentée en pointillés en figure 2 à une position qui correspond à la position du poignard 7 à la fin du cycle de rodage. La figure 4 montre la course d'expansion du poignard 7 de durée t₁ de la position de départ P₀ du poignard 7 à sa position P₁ de fin de cycle d'usinage de l'alésage correspondant. A cette fin de cycle, le circuit 15 effectue la différence entre la valeur correspondante mesurée d par le capteur analogique 13 et la valeur mémorisée de course constante de dégonflage du rodoir pour calculer une nouvelle origine ou nouveau point de départ du cycle de rodage suivant. L'automate commande alors le dégonflage du rodoir, c'est-à-dire le retour du poignard 7 jusqu'à atteindre le nouveau point de départ calculé du cycle de rodage suivant. En modifiant l'origine de chaque cycle de rodage et donc le point de départ du piston 3 de la manière exposée ci-dessus, on s'affranchit de l'usure des bâtonnets abrasifs 2 à chaque passe de rodage de sorte que tous les cycles de rodage sont pratiquement constants en temps. La figure 4 montre le nouveau point de départ calculé P'o du poignard 7 pour un nouveau cycle suivant de rodage, la distance u entre Po' et Po étant représentative de l'usure des bâtonnets abrasifs du rodoir, Vc symbolisant la valeur constante de dégonflage intervenant entre les instants t₁ et t₂.

Le procédé de rattrapage d'usure des abrasifs d'un outil de rodage conforme à l'invention permet donc d'éliminer efficacement l'inconvénient des procédés antérieurs connus selon lesquels le poignard portant les cônes d'expansion revenait toujours au même point de départ, ce qui allongeait progressivement, durant les cycles de rodage, la course nécessaire du poignard pour usiner les alésages au même diamètre théorique final.

## Revendications

1. Procédé de rattrapage d'usure d'un outil de rodage d'une pièce sur une machine de rodage, notamment d'un rodoir expansible pour alésages, où les bâtonnets abrasifs ou pierres du rodoir subissent à chaque cycle de rodage une expansion par un poignard de poussée à cônes d'expansion entraîné par un piston d'un vérin, caractérisé en ce qu'il consiste à mesurer la valeur de position, à partir d'une origine de cycle de rodage, du poignard (7) à la fin de chaque cycle de rodage à laquelle la pièce est entièrement usinée, retrancher à la valeur mesurée de position du poignard (7) une valeur constante de course de dégonflage du rodoir pour obtenir une nouvelle origine du cycle de rodage suivant et à commander le dégonflage du rodoir jusqu'à atteindre la nouvelle origine calculée du cycle de rodage suivant.

2. Procédé selon la revendication 1, caractérisé en ce qu'il consiste à déterminer préalablement la valeur de course constante de dégonflage du rodoir.

3. Dispositif de rattrapage d'usure d'un outil de rodage d'une pièce sur une machine de rodage, notamment d'un rodoir expansible pour alésages, comprenant un vérin (1) solidaire du bâti de la machine de rodage, un poignard (7) entraîné par le piston (3) du vérin (1) et équipé de cônes (8) assurant l'expansion, à chaque cycle de rodage, des bâtonnets abrasifs ou pierres (2) du rodoir pour l'usinage de la pièce, comprenant des moyens (10, 13 ; 15) pour mesurer, à partir d'une origine de cycle de rodage, la valeur de position du poignard (7) à la fin de chaque cycle de rodage où la pièce est entièrement usinée caracterisé en ce qu'il comprend des moyens pour retrancher à la valeur mesurée de position du poignard (7) une valeur de course constante de dégonflage du rodoir pour obtenir une nouvelle origine du cycle de rodage suivant.

4. Dispositif selon la revendication 3, caractérisé en ce que les moyens de mesure précités comprennent un élément (10) solidaire du piston (3) du vérin (1) permettant de repérer la position du poignard (7) et un capteur (13) disposé en face de l'élément de repérage (10) de façon à fournir une valeur de distance (d) séparant l'élément de repérage (10) du capteur (13) proportionnelle à la position du piston (3) par rapport au corps (4) du vérin (1).

5. Dispositif selon la revendication 4, caractérisé en ce que l'élément de repérage (10) comporte une partie (12) inclinée relativement à l'axe longitudinal du vérin (1) et le capteur (13) est fixé au corps (4) du vérin (1) en étant également incliné parallèlement à la partie inclinée (12) de l'élément de repérage (10).

6. Dispositif selon l'une des revendications 3 à 5, caractérisé en ce que les moyens (15) permettant d'obtenir la nouvelle origine d'un cycle de rodage comprennent un moyen mémoire mémorisant la valeur de course constante de dégonflage précitée et un moyen de calcul effectuant, à la fin de chaque cycle de rodage, la différence entre la valeur de distance (d) fournie par le capteur (13) représentative de la position du poignard (7) et la valeur mémorisée de course constante de dégonflage.

7. Dispositif selon la revendication 6, caractérisé en ce que les moyens mémoire et de calcul précités font partie d'un automate de commande et de contrôle des cycles de rodage.

8. Dispositif selon l'une des revendications 1 à 7, caractérisé en ce que le capteur (13) précité est du type analogique.

9. Dispositif selon la revendication 8, caractérisé en ce que le capteur analogique (13) est relié au moyen de calcul précité par l'intermédiaire d'un circuit de conversion analogique-numérique.

## Claims

1. Method for wear adjustment of a workplace honing tool on a honing machine, especially for an expandable honing tool for bore surfaces, where the abrasive rods or stones of the honing tool undergo an expansion in each honing cycle by an expansion cone thrust dagger moved by a piston of a thrustor, characterised in that it consists of measuring the position value from a honing cycle origin of the dagger (7) at the end of each honing cycle in which the part is fully machined, subtract from the measured position value of the dagger (7) a constant deflating travel value of the honing tool so as to obtain a new origin of the next honing cycle and control deflation of the honing tool until reaching the new calculated origin of the next honing cycle.

2. Method according to claim 1, characterised in that it consists of previously determining the constant deflating travel value of the honing tool.

3. Device for wear adjustment of a tool for honing a part on a honing machine, especially for an expansible honing tool for bore surfaces, including a thrustor (1) integral with the frame of the honing machine, a dagger (7) moved by the piston (3) of the thrustor (1) and equipped with cones (8) ensuring the expansion on each honing cycle of abrasive rods or stones (2) of the honing tool for machining the part, including means (10,13 ; 15) to measure from a honing cycle origin the position value of the dagger (7) at the end of each honing cycle where the part is fully machined, characterised in that it includes means to subtract from the measured position value of the dagger (7) a constant deflating travel value of the honing tool so as to obtain a new origin of the next honing cycle.

4. Device according to claim 3, characterised in that said measuring means include an element (10) integral with the piston (3) of the thrustor (1) for marking the position of the dagger (7) and a sensor (13) placed opposite the marking element (10) so as to provide a distance value (d) separating the marking element (10) from the sensor (13) proportional to the position of the piston (3) with respect to the body (4) of the thrustor (1).

5. Device according to claim 4, characterised in that the marking element (10) comprises a portion (12) slanted relatively to the longitudinal axis of the thrustor (1) and the sensor (13) is fixed to the body (4) of the thrustor (1), by being also slanted parallel to the slanted portion (12) of the marking element (10).

6. Device according to one of claims 3 to 5, characterised in that the means (15) for obtaining the new origin of a honing cycle include a memory element memorising said constant deflating travel value and a calculation device carrying out at the end of each honing cycle the difference between the distance value (d) supplied by the sensor (13) representative of the position of the dagger (7) and the memorised constant deflating travel value.

7. Device according to claim 6, characterised in that said memory and calculation means form part of a robot for commanding and controlling the honing cycles.

8. Device according to one of claims 1 to 7, characterised in that said sensor (13) is of the analog type.

9. Device according to claim 8, characterised in that the analog sensor (13) is connected to said calculation device by means of an analog-digital conversion circuit.

## Patentansprüche

1. Verfahren zum Verschleißausgleich eines Werkstücks Honwerkzeugs auf einer Honmaschine, insbesondere ein nachstellbares Honwerkzeug für Bohrungswände, wo die Schleifstäbchen oder Steine der Schmirgelfeile bei jedem Hondurchlauf eine Ausdehnung durch einen Stoßdolch mit durch einen Kolbenzylinder angetriebenen Dehnungszapfen erfahren, dadurch gekennzeichnet, daß es darin besteht, den Positionswert des Dolches (7) von einem Ausgangspunkt des Hondurchlaufs aus am Ende jedes Hondurchlaufs zu messen, bei dem das Werkstück vollständig maschinell bearbeitet wird, von dem gemessenen Positionswert des Dolches (7) einen konstanten Wert der luftablassenden Laufstrecke der Schmirgelfeile abzuziehen, um einen neuen Ausgangspunkt des folgenden Hondurchlaufs zu erhalten und das Luftablassen der Schmirgelfeile zu steuern, bis der neue Ausgangspunkt des folgenden Hondurchlaufs erreicht wird.

2. Verfahren gemäß Anspruch 1, dadurch gekennzeichnet, daß es darin besteht, im vorhinein den Wert des konstanten luftablassenden Laufs der Schmirgelfeile zu bestimmen.

3. Vorrichtung zum Verschleißausgleich eines Werkstücks Honwerkzeugs auf einer Honmaschine, insbesondere ein nachstellbares Honwerkzeug für Bohrungswände, einen fest mit dem Tragelement der Honmaschine verbundenen Zylinder (1), einen durch den Kolben(3) eines Zylinders (1) angetriebenen und mit Dehnungszapfen (8) ausgestatteten Dolch (7) umfassend, die bei jedem Hondurchgang die Dehnung der Schleifstäbchen oder der Steine (2) der Schmirgelfeile für die Bearbeitung des Werkstücks gewährleisten; Mittel (10, 13; 15) zum Messen, von einem Ausgangspunkt eines Hondurchlaufs aus, des Positionswertes des Dolches (7) am Ende jedes Hondurchgangs umfassend, wo das Werkstück vollständig maschinell bearbeitet wird, dadurch gekennzeichnet, daß er Mittel umfaßt, um den gemessenen Positionswert des Dolches (7) von einem konstanten Wert des Luftablassens der Schmirgelfeile abzuziehen, um einen neuen Ausgangspunkt des folgenden Hondurchgangs zu erhalten.

4. Vorrichtung gemäß Anspruch 3, dadurch gekennzeichnet, daß die vorgenannten Meßmittel ein mit dem Kolben(3) des Zylinders (1) fest verbundenes Element (10) umfassen, daß es erlaubt, die Position des Dolches (7) und einen gegenüber des Lokalisationselementes (10) angebrachten Meßfühler (13) derart zu lokalisieren, daß ein Wert der Distanz (d) geliefert wird, die das Lokalisationselement (10) vom Meßfühler (13), proportional zu der Position des Kolbens (3) im Verhältnis zum Korpus (4) des Zapfens (1) trennt.

5. Vorrichtung gemäß Anspruch 4, dadurch gekennzeichnet, daß das Lokalisationselement (10) einen zur Längsachse des Zapfens (1) relativ geneigten Teil (12) umfaßt und daß der Meßfühler (13) am Korpus (4) des Zapfens (1) befestigt ist und dabei ebenfalls parallel zu dem geneigten Teil (12) des Lokalisationselementes (10) geneigt ist.

6. Vorrichtung gemäß einem der Ansprüche 3 bis 5, dadurch gekennzeichnet, daß die Mittel (15) es erlauben, den neuen Ausgangspunkt eines Hondurchgangs zu erreichen, der ein Speichermittel umfaßt, das den vorgenannten Wert des konstanten Luftablassens speichert, und ein Berechnungsmittel, das am Ende jedes Hondurchgangs die Differenz zwischen dem von dem Meßfühler (13) gelieferten Wert der Distanz (d) berechnet, die die Position des Dolches (7) und den gespeicherten Wert des konstantes Laufes des Luftablassens darstellt.

7. Vorrichtung gemäß Anspruch 6, dadurch gekennzeichnet, daß die vorgenannten Speichermittel und die Berechnungsmittel zu einem Automaten zur Steuerung und Kontrolle der Hondurchläufe gehören.

8. Vorrichtung gemäß einem der Ansprüche 1 bis 7, dadurch gekennzeichnet, daß der vorgenannnte Meßfühler (13) von analoger Art ist.

9. Vorrichtung gemäß Anspruch 8, dadurch gekennzeichnet, daß der analoge Meßfühler (13) mit dem vorgenannten Berechnungsmittel mittels eines analogen - numerischen Umwandlungskreislaufes verbunden ist.
